# EUROPEAN PATENT APPLICATION

(11) **EP 0 579 231 A1**
(43) Date of publication of application: **19.01.1994**
(21) Application number: 93111389.8
(22) Date of filing: 15.07.1993
(51) Int. Cl.: A47J 43/25, B26B 5/00

(54) **Cutting apparatus for vegetables and the like**

(30) Priority: 15.07.1992 IL 102507
(71) Applicant: Raz, David, Ariel (IL)
(72) Inventor: Raz, David, Ariel (IL)
(74) Representative: Modiano, Guido, Dr.-Ing.

(57) **Abstract**

A vergetable cutting implement mainly for domestic use, but not exclusively so, comprises a cutting blade and a column of vertically upstanding cutters. A further column of cutters is located in anguler position to the movement of a vegetable carrying slide. The said second column of cutter may be transferable to the said position in lieu of being permanently so located.

## Description

The invention relates to a device for cutting vegetables of all kinds. There are known already devices which comprise a supporting plate in the plane of which extends across a cutting blade a slide which is designed to hold a piece of vegetable to be cut being slidably movable across the said blade and following that blade, in the sense of movement of the slide is positioned a column of upstanding short cutters. Vegetables, such as potatoes, apples or like bodies are affixed to the said slide and are manually advanced towards the said blade which slices off the respective body a thin slice which is then passed across the column of cutters which transform the cut-off slice into a number of strips. Such strips are then used in domestic establishments' kitchen for the preparation of cooked dishes, such as soups or stews or are incorporated in raw state in salads.

Devices of this kind and the described construction serve well the needs - or at least most of the needs - of the ordinary housewife's kitchen, but cannot deliver cut vegetable products by cutting further the strips into smaller bodies.

It is the main object of this invention to provide a device which comprises besides the generally known cutting means referred to above as comprised in generally conventional cutting devices, further means permitting the obtention of substantially cube shaped vegetable fragments by fragmentation of the obtained strips of vegetable matter.

According to the invention the said object is obtained by provision of two embodiments of the new device, both of which embody the conventional cutting means of a blade, not unlike the blade of a joiner's plane and also the conventional column of upstanding cutter and additionally a further set of similar cutter arranged in a column which is located in angular position to the direction of first movement of the vegetable carrying slide or being transferable to such position.

In a first embodiment there is provided a first board shaped member carried on a supporting structure, in the plane of which board is provided, extending crosswise relative to the surface of the board, an elongated cutting blade and parallel thereto a column of upstanding short cutters, a slide which is adapted to carry a vegetable body being slidably movable along the lengthwise extension of the said board, its path crossing both the cutting blade and the column of the upstanding cutters, there being provided in addition to the said known parts and extending normally to the already mentioned first board, a second elongated board in the plane of which are located, and extending a short distance from said plane, a second column of upstanding cutters.

In a second, practical embodiment of the new device, includes, like the first embodiment, a carrying sub-structure on which extends a board member in the plane of which, and across it, extends a cutting blade and a column of upstanding cutters a slide carrying a vegetable body being movable along the said board member and across the cutting blade and the column of upstanding cutters, as is the case in the first embodiment, the board member of the second embodiment being pivotably connected to an underlying second board on which a second column of upstanding cutters is provided and being planarly movable about the connecting pivot, together with the slide connected to it, such that the strips of vegetable matter on the slide are passed across the second column of upstanding cutters and are cut into smaller, substantially cube shaped fragments.

Both embodiments of the new device will now be described in detail with reference to the accompanying drawings in which Figs. 1-3 illustrate the first embodiment and Figs. 4-5 the second one.

In the drawings:
Fig. 1 is a lateral, elevational view of the first embodiment of the device.
Fig. 2 being a sectional view of the device on line A-A of Fig. 1, and
Fig. 3 being a section along line B-B of Fig. 1.
Fig. 4 is a plan view of the second embodiment of the new device, and
Fig. 5 an elevation thereof.

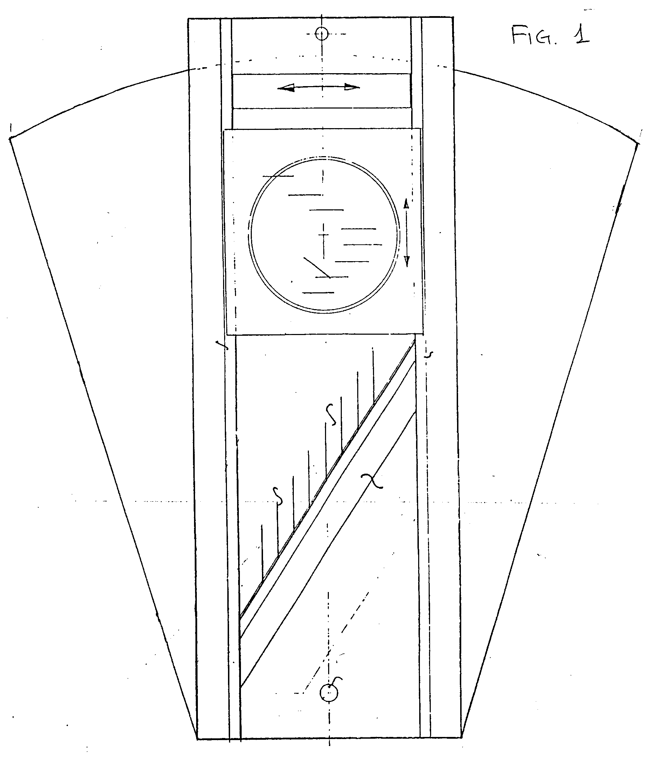

Turning first to Figs. 1-3, there is shown a carrying sub-structure 1 on which is held an edgewise positioned board 2. In the plane of board 2 is located a cutting blade 3, the cutting edge of which is located a short distance above the plane of the board 2. A short distance behind blade 3 extends a column of upstanding cutters 4. A slide 5 comprises a cylinder 6 which has a flange 7 mating with a V-profiled ridge 8 of board 2. In cylinder 6 moves a piston like pusher 9. Normally to board 2 and at common plane extends a second board 10. Between two marginal ridges 11 of board 10 a plate 12 is located and can be slid up and down on board 10, the two ridges 11 constituting a guide. In plate 11 are inserted cutters 14 extending from the surface of the plate, as do cutters 4 from board 2. At the side of plate 12, opposite the side from which the cutters extend, is provided a knob 15. An extensible spring 16 extends between the top edge of board 10 and knob 15.

The embodiment just described is designed to be operated and functions as follows:
A vegetable body, say - a potato or cucumber is placed into the cylinder 6 with its leading end (towards the blade 3) extending short distance out of the cylinder. This distance is adjustable by pushing the piston 9 inwardly. Now the whole slide 5 by manual pressure on the piston is urged forwardly such that a slice of the adjusted thickness is cut-off the vegetable by blade 3, continued forward movement of the slide passes the cut-off slice over the column 4 of cutter, thus rendering the slice into a number of strips. Continued movement of slide 5 with the appended strips of vegetable substance brings the slide and the strips onto plate 12 into the range of cutters 14, the vegetable strips extending across plate 12. Now by grasping the knob 15 the whole of plate 12 is moved downwardly, thus cutters 14 fragmentizing the vegetable strip into small substantially cube formed pieces. Once the knob 15 is no longer manually held the spring 16 which had been expanded during down movement contracts and returns the plate 12 to uppermost position, i.e. being ready for repeated action, when slide 5 having been returned into the position of Fig. 1 is anew moved forwardly across blade 3 and cutters 4, so repeating the described cutting steps.

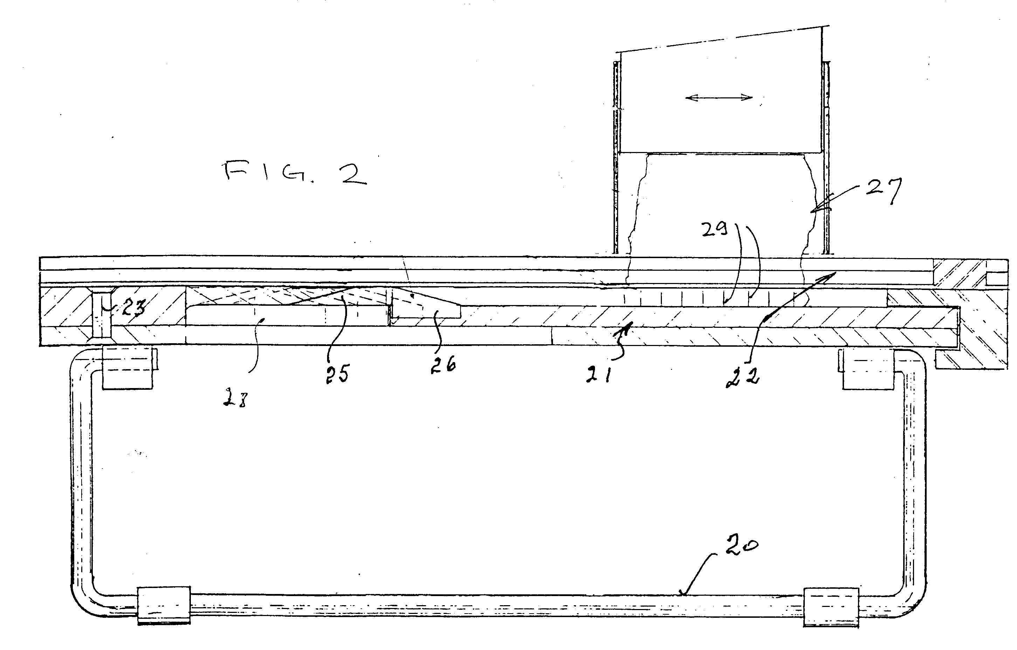

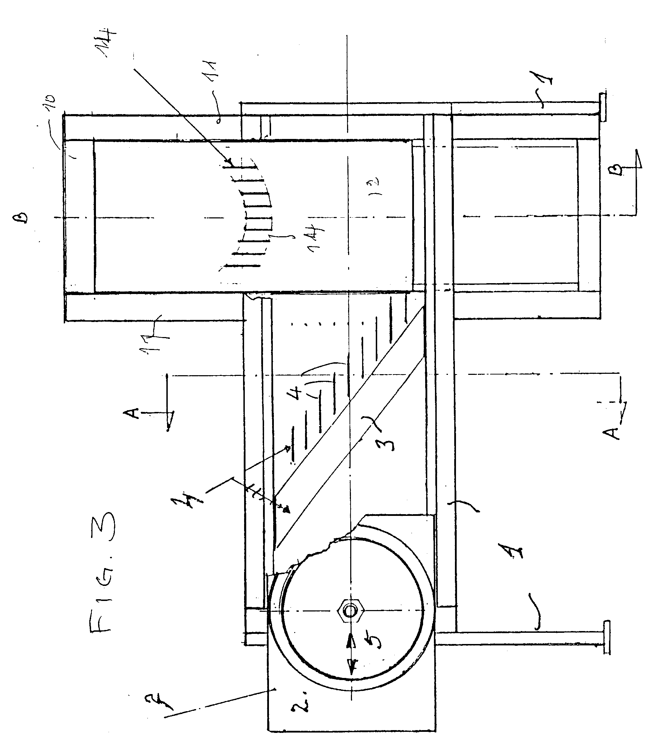

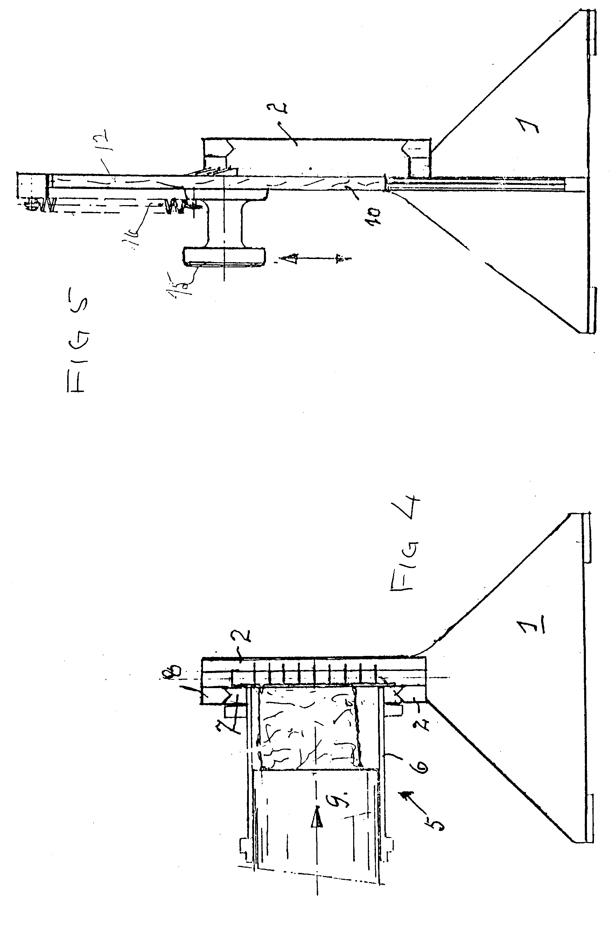

Turning to Figs. 4 and 5 showing a second embodiment of the new vegetable cutter, there is shown a sub-structure 20 which carries, fixed to it a lower plate 21 on which rests an upper plate 22. The two plates 21 and 22 are interconnected by a pivot 23. Thus the upper plate 22 is movable in its own plane through an arcuate path about pivot 23. In plate 22 is embedded in the conventional way, and as is the case in the embodiment of Fig. 1, a cutting blade 25; vicinally to it, across plate 22 extends in the known manner a column of cutters 26. On guide rails 24 is movable a slide 27 of the same construction as described in connection with Fig. 1.

As can be recognized by a glance at Fig. 4 the lower plate 21 is of larger area than the upper plate 22 and extends at both longitudinal edges of the upper plate beyond these. A large hole 28 is provided in plate 22, the purpose of which will become clear. The operation of the new cutting device is as follows:
With the cylinder (see description of first embodiment) loaded with a vegetable, the slide 27 is moved (from the head of plate 22, near the pivot 23) towards the blade 25 and cutters 26 which movement causes the vegetable body to be cut: first detaching a slice from the vegetable and transforming this into numerous strips, as is the case at the already described first embodiment. Now the whole plate, including the slide and the cut vegetable matter is swung through an arcuate path about pivot 23, so as to be positioned on one of the outwardly extending portions of plate 21.

Said swinging movement will cause upstanding cutters 29, positioned perpendicular to cutters 26, to fragnementize the vegetable strips into small substantially cube formed pieces. The movement of slide 27 is continuous left to right up and down or vise versa.
Where technical features mentioned in any claim are-followed by reference signs, those reference signs have been included for the sole purpose of increasing the intelligibility of the claims and accordingly, such reference signs do not have any limiting effect on the scope of each element identified by way of example by such reference signs.

## Claims

1. A vegetable cutting implement comprising the conventional cutting means of a blade, not unlike the blade of a joiner's plane and also the conventional column of upstanding cutters and additionally a further set of similar cutters arranged in a column which is located in angular position to the direction of first movement of the vegetable carrying slide or being transferable to such position.

2. The vegetable cutting implement of claim 1 in which is provided a first board shaped member carried on a supporting structure, in the plane of which board is provided, extending crosswise relative to the surface of the board, an elongated cutting blade and parallel thereto a column of upstanding short cutters characterized by the provision of a slide which is adapted to carry a vegetable body being slidably movable along the lengthwise extension of the said board, its path crossing both the cutting blade and the column of the upstanding cutters, there being provided in addition to the said known parts and extending normally to the already mentioned first board, a second elongated board in the plane of which are located, and extending a short distance from said plane, a second column of upstanding cutters.

3. The vegetable cutting implement of claim 1 wherein are included the conventionally known parts, as stated characterized by a carrying sub-structure on which extends a board member in the plane of which, and across it, extends a cutting blade and a column of upstanding cutters a slide carrying a vegetable body being movable along the said board member and across the cutting blade and the column of upstanding cutters, the said board member being pivotably connected to an underlying second board on which a second column of upstanding cutters is provided and being planarly movable about the connecting pivot, together with the slide connected to it, such that the strips of vegetable matter on the slide are passed across the second column of upstanding cutters and are cut into smaller, substantially cube shaped fragments.
